# EUROPEAN PATENT SPECIFICATION

(11) **EP 2 907 796 B1**
(45) Date of publication and mention of the grant of the patent: **08.04.2020**
(21) Application number: 15000423.2
(22) Date of filing: 12.02.2015
(51) Int. Cl.: C04B 28/10, C04B 28/14, C04B 111/00, C04B 111/28

(54) **METHOD FOR PREPARING INSULATING MATERIAL COMPRISING AEROGEL**
VERFAHREN ZUR HERSTELLUNG VON ISOLATIONSMATERIAL ENTHALTEND AEROGEL
PROCÉDÉ POUR LA PRÉPARATION D'UN MATÉRIAU ISOLANT COMPRENANT L'AEROGEL

(30) Priority: 14.02.2014 IT UD20140024
(43) Date of publication of application: 19.08.2015
(73) Proprietor: Ermacora, Fabio, 33090 Arzene (PN) (IT); Ermacora, Albiz, 33072 Casarsa della Delizia (PN) (IT)
(72) Inventor: Ermacora, Fabio, 33090 Arzene (PN) (IT); Ermacora, Albiz, 33072 Casarsa della Delizia (PN) (IT)
(74) Representative: D'Agostini, Giovanni

(56) References cited:
- DE-A1- 4 441 567
- FR-A1- 2 955 102
- US-A1- 2012 037 838
- MATTHIAS KOEBEL ET AL: "Aerogel-based thermal superinsulation: an overview", JOURNAL OF SOL-GEL SCIENCE AND TECHNOLOGY, KLUWER ACADEMIC PUBLISHERS, BO, vol. 63, no. 3, 15 May 2012 (2012-05-15), pages 315-339, XP035127747, ISSN: 1573-4846, DOI: 10.1007/S10971-012-2792-9

## Description

### Technical field

The present invention relates to a method for preparing a product for building according to the characteristics of the pre-characterizing part of claim 1.

### Prior art

In the building sector it is known to use materials in the form of a viscous mixture to be applied on the walls of buildings both to obtain a surface finishing of the wall and to increase the insulating characteristics for energy saving purposes.

The application of materials in the form of boards of various materials is also known to increase the insulating characteristics for energy saving purposes.

The patent EP 2 256 099 describes a building material comprising a cement binder, an aggregate and reinforcing cellulose fibres, which are treated with oil which is bound to the fibre by a retaining additive. The resulting fibre enclosed in a cement compound has a better deflection under peak load conditions and a better resistance to impacts.

The patent WO 2005/092990 describes a coating composition in which the binder includes a hydraulic cement and a saccharide, such as saccharose.

The Italian patent application no. UD2011A000212 in the name of the applicant describes a method and a composition of a paste based on lime putty to be applied on the wall of a building, which includes at least lime putty, an adhesion and plasticity regulator, such as albumen, oil such as linseed oil, water, synthetic or natural fibres, such as cellulose fibre or glass fibre or combinations thereof and limited quantities of aerogel, wherein the synthetic or natural fibres are intended to incorporate aerogel in the lime putty. The maximum quantity of aerogel that is incorporated in the described and claimed processes is of 2% in weight with respect to the total weight of the final mixture which is made to obtain the product in the form of a paste.

The Patent Application DE 4441567 describes a composite material containing a quantity of aerogel particles amounting to 10-95% in volume and at least one inorganic binder and further describes a process for the production of said composite material. The described process includes one single phase of addition of the materials of the composition and one single mixing phase which provides the mixing of all the materials of the composition until reaching a uniform mixture. The composition provides the use of aerogel with the size of the aerogel particles not defined in detail, but generic.

The Patent Application US 2012/0037838 describes compositions including an aerogel component and having low thermal conductibility. The methods for preparing liquid mixtures or compounds include, for instance, the mixing of the aerogel component with a surface-active agent, binder and other ingredients, such as fibres. The compositions can be pastes, which can be used in applications of coating or rigid self-supporting composites. The described process includes one single phase of addition of the materials of the composition and one single mixing phase which includes the mixing of all the materials of the composition until reaching a uniform mixture.

### Problems of the prior art

The materials in the form of a viscous mixture to be applied on the walls are often characterised by levels of viscosity which make their application difficult either because they are too liquid or because they are too viscous. In any case, the insulating characteristics obtainable by the application on the walls of said viscous materials are limited and not sufficient to obtain thermal insulation coefficients in line with the recent regulations which are more and more demanding in terms of thermal conductibility of the walls, so that it is often preferable to apply boards of insulating materials, both of natural and of artificial origin or a combination thereof.

However, the applied boards necessarily cause installation problems because it is necessary to make holes on the walls on which the boards must be applied, then proceed to the fixing being careful to check both the alignment between adjacent boards and the coplanarity of adjacent boards. Furthermore, once the application of the boards has been completed, it will be necessary to fill the gaps between the boards and apply a viscous material for the surface finishing of the boards.

Furthermore, not all the prior art products are able to ensure the antibacterial or anti-mould functions combined with the maintenance of the wall breathing. In order to obtain the various functions it is often necessary to resort to the application of various products and, in any case, one does not necessarily obtain all the required characteristics related to the antibacterial, anti-mould functions, maintenance of breathing, high degree of thermal insulation. For example, some products are conceived in such a way that materials having different characteristics, for example insulating function and supporting material in a viscous form, are bound to each other in one single product in a viscous form to be applied on the walls. However, the binding function is often performed by adding surface-active agents which, however, have the drawback of stopping the wall breathing. Moreover, the surface-active agents lose their effectiveness in time, thus reducing the benefits of the product in time. Furthermore, this type of mixings hinders the recycling of the material, both of the material at the end of its life cycle and of any waste produced during the preparation of the product and/or during the laying of the product.

Many products of the prior art require that their preparation is carried out simultaneously to their application on the wall and, therefore, they require the mixing of a basic product in the form of a powder that, following the addition of water and other components, forms the viscous mixture to be applied. As a consequence, the preparation exposes both those who prepare the product and, in case of application inside houses, the environment in which people will later live, to the presence of dusts, often also very fine dusts which may be inhaled with the consequent onset of disorders and the need to use protection devices such as masks for the protection of the operators who handle the product frequently.

With particular reference to the Italian patent application no. UD2011A000212 in the name of the applicant, the described process does not allow to obtain a product in the form of a paste with high quantities of aerogel, because, although overcoming the problems which have not been previously solved of being able to obtain an incorporation of aerogel into the lime putty, in the described method it is not possible to obtain a high incorporation of aerogel. As a consequence, although obtaining remarkable results from the point of view of the insulating characteristics with respect to the prior art materials, by the solution according to the Italian patent application no. UD2011A000212 it is not possible to fully exploit the characteristics of the aerogel product, above all due to the difficulty in obtaining a product stable in time, this characteristic being solved by the Italian patent application no. UD2011A000212 by limiting the maximum quantity of aerogel introduced into the mixture and by means of the described effect of the synthetic or natural fibres, which contribute to incorporating aerogel into the lime putty providing the product with the required stability. As a consequence, the solution according to the Italian patent application no. UD2011A000212, although improving the insulating characteristics with respect to the prior art products, does not manage to overcome and further improve the values achieved due to the problems related to the hygroscopicity of aerogel because it is necessary to respect a certain balance between the quantity of aerogel and the quantity of natural or synthetic fibres and the quantity of oil. In fact, in the solution according to the Italian patent application no. UD2011A000212 it is only thanks to the simultaneous presence of cellulose fibre and linseed oil that the combination of the lime putty with aerogel is adjusted and optimized because the cellulose fibre carries out the function of incorporating the aerogel while the absorption of moisture by the cellulose is prevented thanks to the presence of the linseed oil.

### Aim of the invention

The aim of the present invention is to provide a material containing a high quantity of aerogel in the form of a viscous mixture with high insulation characteristics which is ready for use to be applied on walls of any form, indifferently straight or curved or holed, thus creating one single body with the surface of a building and which at the same time maintains good wall breathing characteristics with additional anti-mould and antibacterial functions. A further aim of the present invention is to provide a material which is adapted for the application on sheets or boards to obtain insulation sheets or insulation boards, for example for the insulation and protection from the heat, from the cold or both of boilers and machines which need insulation.

### Concept of the invention

The aim is achieved by the characteristics of the main claim. The sub-claims represent advantageous solutions.

### Advantageous effects of the invention

The solution according to the present invention, by the considerable creative contribution the effect of which constitutes an immediate and important technical progress, presents various advantages.

The product according to the present invention is of easy application and ready for use, without requiring particular phases of preparation with the mixing of dusty basic products.

Furthermore, the preparation method allows, with one single process, to obtain products in the form of a paste as well as products in the form of a finish coating, that is to say, a product which is used to level and hide flaws of the walls providing the wall with a smoother look.

Furthermore, the product is completely recyclable and, therefore, reduces environmental impact. This aspect has particular relevance both for what relates to the phases of production of the product, because possible manufacture waste can be immediately recycled in a following phase of preparation of additional product, and for what relates to the recycling of the product at the end of its life cycle, and for what relates to the recycling of possible waste that is obtained during the phases of application of the product on the walls. This also advantageously prevents large quantities of waste from being sent to the waste disposal site and/or from being subjected to further treatments with consequent additional costs, which can also be relevant and affect the cost of the finished product.

Advantageously, the product according to the present invention also has a high reflectivity for U.V. rays, with benefits both from the point of view of thermal insulation and of the protection of the painting and of the underlying material from the aggression of ultraviolet rays, ensuring a longer duration in time and a considerable resistance to ageing.

### Description of the drawings

In the following a solution is described with reference to the enclosed drawings, which are to be considered as a non-exhaustive example of the present invention in which:
Fig. 1 schematically shows the result of the product obtained by the described process in which aerogel is bound within the lime.
Fig. 2 schematically shows the phases of the preparation method according to the invention.
Fig. 3 shows an embodiment of the invention in the form of an insulation board incorporating the product according to the invention in a multi-layer structure with two supporting layers.
Fig. 4 shows an embodiment of the invention in the form of an insulation board incorporating the product according to the invention in a multi-layer structure with only one supporting layer.

### Description of the invention

The present invention relates to an insulating material in the form of a wet paste and to a related preparation method.

The insulating material is characterized by the presence of fibres or fibrous material or material in the form of fibres, resins and lime putty along with the presence of high quantities of aerogel, which is a substance that in the solid state is similar to a gel but that, instead of the liquid component of the gel, includes a gas. For the purpose of the present description and of the appended claims the terms fibres, fibrous material, material in the form of fibres have to be considered equivalent. Aerogel has high insulation characteristics and, although its use is suggested in insulation applications on buildings, in general such applications are conceived in such a way that aerogel is used as a filler in the form of granules that are used to fill and insulate any possible gaps in the masonry. The applications providing a mixing with plastic components for the purpose of facilitating its application do not take into consideration the fact that aerogel, being essentially made up of gaseous and, therefore, non-liquid, components, is hygroscopic and it is not possible to obtain a correct mixing of the product, so that often aerogel is simply added in the form of grains without worrying about its correct integration into the finished product. To this purpose, surface-active components are often used in the prior art in the formulation of products, which are not easy to mix with one another and the surface-active components act as a binder. However, the use of surface-active agents has many drawbacks both due to the fact that they lose their effectiveness in time and because they give rise to non-natural and hardly recyclable products. Moreover, the use of surface-active agents determines the loss of the breathing function, which, in case of application on the walls of buildings, is a very important requirement for the purpose of the healthiness of houses.
Lime putty is a paste of hydrated lime obtained by slaking quicklime in water.

In the following of the present description by mixture of lime putty and gypsum one means a product containing lime and gypsum, a mixture containing from 35 to 65% in weight of lime putty with respect to the quantity in weight of gypsum, preferably a mixture containing from 40 to 60% in weight of lime putty with respect to the quantity in weight of gypsum, even more preferably a mixture containing about 50% in weight of lime putty with respect to the quantity in weight of gypsum.

In a first formulation, which is particularly suitable in case of use of natural fibres, in particular cellulose fibres, the preparation of the product occurs, per 10 kg of product, according to the following phases to be carried out in a mixer, preferably at room temperature:
a) adding in the mixer lime putty or a mixture of lime putty and gypsum according to the quantities or weight percentages shown in Table 1.
b) adding in the mixer a first quantity of water according to the quantities or weight percentages shown in Table 1;
c) adding in the mixer resins according to the quantities or weight percentages shown in Table 1;
d) adding in the mixer material in the form of natural fibres, preferably cellulose fibre, according to the quantities or weight percentages shown in Table 1;
e) adding in the mixer aerogel in a granular form with a large average size of the granules according to the quantities or weight percentages shown in Table 1;
f) adding in the mixer aerogel with a very fine average size of the granules according to the quantities or weight percentages shown in Table 1;
g) adding in the mixer a second quantity of water according to the quantities or weight percentages shown in Table 1.

**Table1**

| | % | [gr] |
|---|---|---|
| Lime putty | 4.80 | 480 |
| or mixture of lime putty and gypsum | | |
| First quantity of water | 61.70 | 6170 |
| Resin | 0.10 | 10 |
| Material in the form of natural fibres | 0.90 | 90 |
| Material in the form of synthetic fibres | 0.00 | 0 |
| Large size aerogel | 18.40 | 1840 |
| Fine size aerogel | 6.40 | 640 |
| Second quantity of water | 7.70 | 770 |
| Total | 100.00 | 10000 |

In a second formulation, which is particularly suitable in case of use of material in the form of fibres of synthetic origin, in particular glass fibres or basalt fibres, the preparation of the product occurs, per 10 kg of product, according to the following phases to be carried out in a mixer, preferably at room temperature:
a) adding in the mixer lime putty or a mixture of lime putty and gypsum according to the quantities or weight percentages shown in Table 2.
b) adding in the mixer a first quantity of water according to the quantities or weight percentages shown in Table 2;
c) adding in the mixer resins according to the quantities or weight percentages shown in Table 2;
d) adding in the mixer material in the form of synthetic fibres, preferably glass fibre or basalt fibre, according to the quantities or weight percentages shown in Table 2;
e) adding in the mixer aerogel in a granular form with a large average size of the granules according to the quantities or weight percentages shown in Table 2;
f) adding in the mixer aerogel with a very fine average size of the granules according to the quantities or weight percentages shown in Table 2.

**Table 2**

| | % | [gr] |
|---|---|---|
| Lime putty | 5.10 | 510 |
| or mixture of lime putty and gypsum | | |
| First quantity of water | 67.20 | 6720 |
| Resin | 0.10 | 10 |
| Material in the form of natural fibres | 0.00 | 0 |
| Material in the form of synthetic fibres | 1.40 | 140 |
| Large size aerogel | 19.45 | 1945 |
| Fine size aerogel | 6.75 | 675 |
| Second quantity of water | 0.00 | 0 |
| Total | 100.00 | 10000 |

In a third formulation which is particularly suitable in case of the simultaneous use of fibres of natural origin, in particular cellulose fibres, and fibres of synthetic origin, in particular glass fibres or basalt fibres, the preparation of the product occurs, per 10 kg of product, according to the following phases to be carried out in a mixer, preferably at room temperature:
a) adding in the mixer lime putty or a mixture of lime putty and gypsum according to the quantities or weight percentages shown in Table 3.
b) adding in the mixer a first quantity of water according to the quantities or weight percentages shown in Table 3;
c) adding in the mixer resins according to the quantities or weight percentages shown in Table 2;
d1) adding in the mixer material in the form of natural fibres, preferably cellulose fibre, according to the quantities or weight percentages shown in Table 3;
d2) adding in the mixer material in the form of synthetic fibres, preferably glass fibre or basalt fibre, according to the quantities or weight percentages shown in Table 3;
e) adding in the mixer aerogel in a granular form with a large average size of the granules according to the quantities or weight percentages shown in Table 3;
f) adding in the mixer aerogel with a very fine average size of the granules according to the quantities or weight percentages shown in Table 3.

**Table 3**

| | % | [gr] |
|---|---|---|
| Lime putty | 5.15 | 515 |
| or mixture of lime putty and gypsum | | |
| First quantity of water | 67.50 | 6750 |
| Resin | 0.10 | 10 |
| Material in the form of natural fibres | 0.45 | 45 |
| Material in the form of synthetic fibres | 0.40 | 40 |
| Large size aerogel | 19.70 | 1970 |
| Fine size aerogel | 6.70 | 670 |
| Second quantity of water | 0.00 | 0 |
| Total | 100.00 | 10000 |

The phases a) relating to the addition in the mixer of lime putty or of a mixture of lime putty and gypsum and b) relating to the addition in the mixer of a first quantity of water, if necessary, can be reciprocally inverted. The phases e) relating to the addition in the mixer of aerogel in a granular form with a large average size of the granules and f) relating to the addition in the mixer of aerogel with a very fine average size of the granules can be reciprocally inverted or occur partially or completely simultaneously. The phase g) relating to the addition in the mixer of a second quantity of water, if present, can be included in the phase b) or can be absent.

Preferably the aerogel is silicon aerogel, but one can also use other types of products in the form of aerogel. In the following of the present description and in the appended claims, therefore, the term "aerogel" will generally have to be understood as comprising silicon aerogel and other types of aerogel and the term "silicon aerogel" will have to be understood as also comprising any other equivalent products in the form of aerogel.

By using the method according to the present invention it is possible to obtain a paste in which large quantities of aerogel are incorporated in a stable way into the obtained mixture, a result that so far had been considered as not obtainable due to the high hygroscopicity of aerogel whose incorporation in a stable way was not considered possible except in small quantities.

As for aerogel, by the expression "aerogel in a granular form with a large average size of the granules" or "Large size aerogel" one means aerogel in a granular form with an average size of the granules between 0.1 and 5 mm, the best results being obtained with silicon in a granular form with an average size of the granules between 1.5 mm and 5 mm, bearing in mind that during the mixing carried out by the method according to the present invention a breakage of the aerogel particles is induced, which facilitates their incorporation and promotes the properties obtained for the finished product, as will be explained in the following of the present description.

We would like to point out that, with respect to the solution previously described in the Italian patent application no. UD2011A000212 in the name of the applicant, by the solution according to the present description it is possible to use aerogel with a larger average size of the grains with respect to what had been previously provided. In fact, in the Italian patent application no. UD2011A000212 in the name of the applicant the average size of the grains that was to be used had an upper limit of 1.2 mm, whereas by the present method it is possible to use aerogel with a larger average size of the grains, up to 5 mm, with benefits both from the point of view of the product obtained, thanks to the different preparation method, and from the economic point of view, because aerogel with a larger average size of the grains has a lower cost than aerogel with a smaller average size of the grains. Such an advantageous possibility is due to the new preparation method, which also allows to obtain a new highly innovative product, which allows to obtain even better results from the point of view of insulation.

As for aerogel, by the expression "aerogel with a very fine average size of the granules" or "Fine size aerogel" one means aerogel in the form of a powder with an average size of the particles between 2 and 40 microns, the best results being obtained with silicon in the form of a powder with an average size of the particles between 2 and 24 microns.

In general, therefore, one can use silicon aerogel with an average size of the particles between 2 microns and 5 mm, bearing in mind that during the mixing carried out by method according to the present invention a breakage of the aerogel particles is induced, which facilitates their incorporation and promotes the properties obtained for the finished product, as will be explained in the following of the present description.

As pointed out, there is provided the use of material in the form of fibres of natural origin, such as cellulose fibre, or of material in the form of fibres of synthetic origin, such as glass fibres or basalt fibres, or of a mixture of fibres of natural origin and fibres of synthetic origin.

As for cellulose fibre, it is a natural product and it is not dangerous for health. Moreover, it is a material that has no negative effects related to environmental impact. Preferably one will use cellulose fibre in the form of a powder or flakes, even more preferably of derivation from paper recycling processes. One will use cellulose fibre with a content of at least 40% of fibres having a length greater than 32 microns and a content lower than 2% of fibres having a length greater than 2500 microns, or cellulose fibre with a content of at least 50% of fibres having a length greater than 32 microns and a content lower than 10% of fibres having a length greater than 800 microns, or cellulose fibre with a content of at least 60% of fibres having a length greater than 32 microns and a content lower than 10% of fibres having a length greater than 200 microns, or a combination thereof.

The cellulose fibre or the glass fibre or the basalt fibre, and in general the materials in the form of fibres of synthetic or natural origin, in the present invention have the function of incorporating aerogel in the dry phase of the process, whereas in the wet phase of the preparation process it has a thickening function and contributes to maintaining the obtained mixture homogenous. Moreover, in the paste product ready for use, the fibre contributes to retaining the wet part of the mixture, improving its plasticity and workability and facilitating its application because it makes the mixture very homogenous and workable. Finally, when the product applied, for example on a wall, has reached the final condition of dry product, the fibre contributes to increasing the insulating characteristics of the applied treatment.

Furthermore, the glass fibre or the basalt fibre make the treated surface, once the mixture has dried, more resistant to possible impacts.

The mixture with the presence of cellulose fibre only is very workable and suitable for places with little humidity. The formulation according to the invention is suitable for applications of the mixture also with medium thicknesses, for example on the order of 15 mm. In fact, cellulose fibre has the drawback that it can retain humidity, with a consequent decrease in the insulating power of the whole product. If necessary, one can add oil, such as linseed oil, to prevent the occurrence of such phenomena because linseed oil is absorbed by the cellulose making it weather-proof. In this way, once the applied product has dried, the cellulose fibre acts only as an element that incorporates the aerogel, while the absorption of humidity is prevented thanks to the presence of the linseed oil.

The mixture with the simultaneous presence of cellulose fibre and glass fibre or basalt fibre is suitable for places with little humidity. The formulation according to the invention is suitable for applications of the mixture also with large thicknesses, for instance on the order of 30 mm.

The mixture with the presence of glass fibre or basalt fibre only is suitable for damp places or environments. The formulation according to the present invention is suitable for applications of the mixture also with large thicknesses, for example on the order of 30 mm. This formulation is very resistant to high temperatures and it can be also used as a protection for environments having a high risk of fire. Tests were made, which revealed that the use of this material in anti-fire doors leads to the reduction in the thickness of the fireproof material and to the consequent decrease in the thickness and in the weight of the doors. This mixture can be used for the making of insulation boards, because it considerably facilitates the preparation of the boards, not creating shrinkages and keeping the desired sizes essentially corresponding to those defined during the application of the product.

One may use other types of synthetic or also natural fibres. However, only with cellulose fibre and glass fibre or basalt fibre it is possible to neutralize the mixture in case of drying of the product by remixing it and regenerating it without producing scrap and consequent waste. Advantageously, in fact, in case of the presence of scrap, the latter can be directly added during the phases of preparation of new product, avoiding the need to take the scrap to a waste disposal site and/or avoiding the need for particular treatments, with important benefits both from the environmental and from the economic point of view.

The addition of resin, preferably of the colloid or thickening type, strengthens and helps the lime to bind the high quantity of aerogel: the resin used is in the form of a mixture made up of wood oil, soybean oil, glycerides of fatty acids, lentisk resin also known as Chios mastic. The resin in the form of a mixture used is a product classified as non-dangerous according to the regulations in force. Advantageously the presence of said oils in the resin in the form of a mixture that is used in the preparation of the paste according to the invention compensates at least partially for the absence of linseed oil that, as specified, is preferably absent in the present preparation method.

The lime putty is used as a binder and to provide the product with consistency and mass once it has been applied and has dried. Preferably the putty is aged putty with a percentage of dryness ranging from 40% to 60%. It is possible to use putty of various kinds, among which, without limits for the purposes of the present invention, magnesium and calcium putty. The presence in various percentages of other components in the putty, such as alumina (Al₂O₃), iron oxide (Fe₂O₃), silicon dioxide (SiO₂), does not modify the essential characteristics of the finished product.

The obtainable thermal conductivity varies according to the percentage of aerogel that it is possible to bind, as well as on the basis of the form of aerogel that is used, that is to say, whether in the form of grains or of powder.

Surprisingly by the new formulation and the new preparation method it was possible to obtain thermal conductibility values on the order of 0.0147-0.0194 W/mK, considerably lower than the solutions previously found by the applicant and disclosed in the Italian patent application no. UD2011A000212. Therefore, it is evident that the present process and the present formulation are a considerable improvement, obtained thanks to the fact that by the described method it was possible to bind in a stable way in the putty high quantities of aerogel, this possibility being obtained only thanks to the particular method adopted, overcoming difficulties that before were considered insurmountable because of the high hygroscopicity of aerogel.

These obtainable values are considerably better with respect to other insulating materials available on the market, such as polystyrene which is usually used for the external insulation of buildings and which has thermal conductibility values on the order of 0.045 W/mK.

The product can be for example applied both inside and outside the walls of a building with thicknesses that may range from 0.5 to 3 cm obtaining already remarkable benefits from the point of view of the thermal insulation function without stopping the wall breathing.

Advantageously, moreover, on the product applied and dried one can carry out finishing works with finish coatings, plasters, marmorino plasters and paints without further treatments being required.

The product can even be used for operations of historical recovery of buildings, with the double purpose of restoring even very old walls, for example made of stones, and obtain a good insulation effect also enabling the following application of frescoes which had been previously removed with the tear-off technique before the treatment of the wall, operations which would be rather difficult with the usual insulating treatments based on the application of polystyrene boards or other types of materials, also natural.

Furthermore, the product can be used as a raw material, that is to say, as a binder, to mix it with aggregates of any type and grain size, formulating in this way mortars, finish coatings and finishing products, with remarkable insulating characteristics with respect to other similar products which are poor from the point of view of thermal insulation and of the maintenance of the breathing function. Furthermore, one can provide, without substantially jeopardizing the product characteristics, the addition of pigments for the realization of colour finishes.

With reference to the possible phase g) of addition of water that can be present at the end of the working process, it can be useful to make the mixture more workable. The quantity of water may vary according to the type of putty, for example when the percentage of dryness present in the putty is higher than 40%. The optimal condition is when the percentage of dryness present in the lime putty is between 45 and 50%. If the percentage is lower less water is added, whereas if the percentage of dryness is higher water is added until optimizing the mixture to compensate for the lower presence of water in the putty. Further factors that may lead to a variation in the quantity of water added with respect to the total of the composition can be given by the composition of the putty used.

With reference to the first formulation, which is a formulation particularly suitable in case of use of material in the form of fibres of natural origin, in particular cellulose fibres, the applicant also made some tests with different quantities of components.

Therefore, the quantities of components in grams or in weight percentage were established to obtain the desired results of the mixture, the optimal quantities of components being shown in Table 4.

**Table 4**

| | % | [gr] |
|---|---|---|
| Lime putty or mixture of lime putty and gypsum | 3.00 | 300 |
| First quantity of water | 55.60 | 5560 |
| Resin | 0.20 | 20 |
| Material in the form of natural fibres | 0.80 | 80 |
| Material in the form of synthetic fibres | 0.00 | 0 |
| Large size aerogel | 27.55 | 2755 |
| Fine size aerogel | 3.75 | 375 |
| Second quantity of water | 9.10 | 910 |
| Total | 100.00 | 10000 |

**Table 5**

| | % | [gr] |
|---|---|---|
| Lime putty or mixture of lime putty and gypsum | 3.00 | 150 |
| First quantity of water | 55.60 | 2780 |
| Resin | 0.20 | 10 |
| Material in the form of natural fibres | 0.80 | 40 |
| Material in the form of synthetic fibres | 0.00 | 0 |
| Large size aerogel | 27.55 | 1378 |
| Fine size aerogel | 3.75 | 188 |
| Second quantity of water | 9.10 | 455 |
| Total | 100.00 | 5000 |

This formulation is particularly suitable if one wishes to produce limited quantities of product for each operating cycle. For example, in case of production of 5 Kg of product one will preferably use the quantities in grams or in weight percentage shown in Table 5.

With reference to the first formulation, which is a formulation particularly suitable in case of use of material in the form of fibres of natural origin, in particular cellulose fibres, the applicant also made some tests with different quantities of components. Therefore, the quantities of components in grams or in weight percentage were established to obtain the desired results of the mixture, the optimal quantities of components being shown in Table 6.

**Table 6**

| | % | [gr] |
|---|---|---|
| Lime putty or mixture of lime putty and gypsum | 5.35 | 535 |
| First quantity of water | 58.60 | 5860 |
| Resin | 1.40 | 140 |
| Material in the form of natural fibres | 0.95 | 95 |
| Material in the form of synthetic fibres | 0.00 | 0 |
| Large size aerogel | 15.80 | 1580 |
| Fine size aerogel | 9.40 | 940 |
| Second quantity of water | 8.50 | 850 |
| Total | 100.00 | 10000 |

**Table 7**

| | % | [gr] |
|---|---|---|
| Lime putty or mixture of lime putty and gypsum | 5.35 | 1605 |
| First quantity of water | 58.60 | 17580 |
| Resin | 1.40 | 420 |
| Material in the form of natural fibres | 0.95 | 285 |
| Material in the form of synthetic fibres | 0.00 | 0 |
| Large size aeroqel | 15.80 | 4740 |
| Fine size aerogel | 9.40 | 2820 |
| Second quantity of water | 8.50 | 2550 |
| Total | 100.00 | 30000 |

This formulation is particularly suitable if one wishes to produce great quantities of product for each operating cycle. For example, in case of production of 30 Kg of product one will preferably use the quantities in grams or in weight percentage shown in Table 7.

With reference to the second formulation, which is particularly suitable in case of use of material in the form of fibres of synthetic origin, in particular glass fibres or basalt fibres, the applicant also made some tests with different quantities of components. Therefore, the quantities of components in grams or in weight percentage were established to obtain the desired results of the mixture, the optimal quantities of components being shown in Table 8.

This formulation is particularly suitable if one wishes to produce limited quantities of product for each operating cycle. For example, in case of production of 5 Kg of product one will preferably use the quantities in grams or in weight percentage shown in Table 9.

**Table 8**

| | % | [gr] |
|---|---|---|
| Lime putty or mixture of lime putty and gypsum | 2.90 | 290 |
| First quantity of water | 58.40 | 5840 |
| Resin | 0.20 | 20 |
| Material in the form of natural fibres | 0.00 | 0 |
| Material in the form of synthetic fibres | 1.70 | 170 |
| Large size aerogel | 31.00 | 3100 |
| Fine size aerogel | 5.80 | 580 |
| Second quantity of water | 0.00 | 0 |
| Total | 100.00 | 10000 |

**Table9**

| | % | [gr] |
|---|---|---|
| Lime putty or mixture of lime putty and gypsum | 2.90 | 145 |
| First quantity of water | 58.40 | 2920 |
| Resin | 0.20 | 10 |
| Material in the form of natural fibres | 0.00 | 0 |
| Material in the form of synthetic fibres | 1.70 | 85 |
| Large size aerogel | 31.00 | 1550 |
| Fine size aerogel | 5.80 | 290 |
| Second quantity of water | 0.00 | 0 |
| Total | 100.00 | 5000 |

With reference to the second formulation, which is particularly suitable in case of use of material in the form of fibres of synthetic origin, in particular glass fibres or basalt fibres, the applicant also made some tests with different quantities of components, establishing the quantities of components in grams or in weight percentage to obtain the desired results of a stable mixture shown in Table 10.

**Table 10**

| | % | [gr] |
|---|---|---|
| Lime putty or mixture of lime putty and gypsum | 5.60 | 560 |
| First quantity of water | 69.00 | 6900 |
| Resin | 1.50 | 150 |
| Material in the form of natural fibres | 0.00 | 0 |
| Material in the form of synthetic fibres | 1.20 | 120 |
| Large size aerogel | 14.30 | 1430 |
| Fine size aerogel | 8.40 | 840 |
| Second quantity of water | 0.00 | 0 |
| Total | 100.00 | 10000 |

**Table 11**

| | % | [gr] |
|---|---|---|
| Lime putty or mixture of lime putty and gypsum | 5.60 | 1680 |
| First quantity of water | 69.00 | 20700 |
| Resin | 1.50 | 450 |
| Material in the form of natural fibres | 0.00 | 0 |
| Material in the form of synthetic fibres | 1.20 | 360 |
| Large size aeroqel | 14.30 | 4290 |
| Fine size aerogel | 8.40 | 2520 |
| Second quantity of water | 0.00 | 0 |
| Total | 100.00 | 30000 |

This formulation is particularly suitable if one wishes to produce great quantities of product for each operating cycle. For example, in case of production of 30 Kg of product one will preferably use the quantities in grams or in weight percentage shown in Table 11.

With reference to the third formulation, which is particularly suitable in case of the simultaneous use of material in the form of fibres of natural origin, in particular cellulose fibres, and material in the form of fibres of synthetic origin, in particular glass fibres or basalt fibres, the applicant also made some tests with different quantities of components, establishing the quantities of components in grams or in weight percentage to obtain the desired results of a stable mixture shown in Table 12.

**Table 12**

| | % | [gr] |
|---|---|---|
| Lime putty or mixture of lime putty and gypsum | 3.00 | 300 |
| First quantity of water | 58.00 | 5800 |
| Resin | 0.20 | 20 |
| Material in the form of natural fibres | 0.70 | 70 |
| Material in the form of synthetic fibres | 0.70 | 70 |
| Large size aeroqel | 31.40 | 3140 |
| Fine size aerogel | 6.00 | 600 |
| Second quantity of water | 0.00 | 0 |
| Total | 100.00 | 10000 |

**Table 13**

| | % | [gr] |
|---|---|---|
| Lime putty or mixture of lime putty and gypsum | 3.00 | 150 |
| First quantity of water | 58.00 | 2900 |
| Resin | 0.20 | 10 |
| Material in the form of natural fibres | 0.70 | 35 |
| Material in the form of synthetic fibres | 0.70 | 35 |
| Large size aeroqel | 31.40 | 1570 |
| Fine size aerogel | 6.00 | 300 |
| Second quantity of water | 0.00 | 0 |
| Total | 100.00 | 5000 |

This formulation is particularly suitable if one wishes to produce limited quantities of product for each operating cycle. For example, in case of production of 5 Kg of product one will preferably use the quantities in grams or in weight percentage shown in Table 13.

With reference to the third formulation, which is particularly suitable in case of the simultaneous use of material in the form of fibres of natural origin, in particular cellulose fibres, and material in the form of fibres of synthetic origin, in particular glass fibres or basalt fibres, the applicant also made some tests with different quantities of components, establishing the quantities of components in grams or in weight percentage to obtain the desired results of a stable mixture shown in Table 14.

**Table 14**

| | % | [gr] |
|---|---|---|
| Lime putty or mixture of lime putty and gypsum | 6.10 | 610 |
| First quantity of water | 66.50 | 6650 |
| Resin | 1.55 | 155 |
| Material in the form of natural fibres | 0.60 | 60 |
| Material in the form of synthetic fibres | 0.45 | 45 |
| Large size aerogel | 15.70 | 1570 |
| Fine size aerogel | 9.10 | 910 |
| Second quantity of water | 0.00 | 0 |
| Total | 100.00 | 10000 |

**Table 15**

| | % | [gr] |
|---|---|---|
| Lime putty or mixture of lime putty and gypsum | 6.10 | 1830 |
| First quantity of water | 66.50 | 19950 |
| Resin | 1.55 | 465 |
| Material in the form of natural fibres | 0.60 | 180 |
| Material in the form of synthetic fibres | 0.45 | 135 |
| Large size aeroqel | 15.70 | 4710 |
| Fine size aerogel | 9.10 | 2730 |
| Second quantity of water | 0.00 | 0 |
| Total | 100.00 | 30000 |

This formulation is particularly suitable if one wishes to produce great quantities of product for each operating cycle. For example, in case of production of 30 Kg of product one will preferably use the quantities in grams or in weight percentage shown in Table 15.

In general, with reference to the first formulation, which is particularly suitable in case of use of material in the form of fibres of natural origin, in particular cellulose fibres, it is provided that the components can be introduced according to the following weight percentages:
- lime putty or a mixture of lime putty and gypsum: between 3.00 and 6.00%;
- first quantity of water: between 55.00 and 65.00%;
- resins: between 0.10 and 1.50%;
- material in the form of natural fibres: between 0.70 and 1.00%;
- aerogel with a large average size of the granules: between 15.00 and 28.00%;
- aerogel with a very fine average size of the granules: between 3.00 and 10.00%;
- second quantity of water: between 7 and 10%.

In general, with reference to the second formulation, which is particularly suitable in case of use of material in the form of fibres of synthetic origin, in particular glass fibres or basalt fibres, it is provided that the components can be introduced according to the following weight percentages:
- lime putty or a mixture of lime putty and gypsum: between 2.80 and 6.00%;
- first quantity of water: between 58.00 and 70.00%;
- resins: between 0.10 and 1.50%;
- material in the form of synthetic fibres: between 1.20 and 1.70%;
- aerogel with a large average size of the granules: between 14.00 and 35.00%;
- aerogel with a very fine average size of the granules: between 5.00 and 10.00%.

In general, with reference to the third formulation, which is particularly suitable in case of the simultaneous use of material in the form of fibres of natural origin, in particular cellulose fibres, and material in the form of fibres of synthetic origin, in particular glass fibres or basalt fibres, it is provided that the components can be introduced according to the following weight percentages:
- lime putty or a mixture of lime putty and gypsum: between 3.00 and 6.50%;
- first quantity of water: between 58.00 and 70.00%;
- resins: between 0.10 and 1.70%;
- material in the form of natural fibres: between 0.40 and 0.80%;
- material in the form of synthetic fibres: between 0.40 and 0.80%;
- aerogel with a large average size of the granules: between 15.00 and 32.00%;
- aerogel with a very fine average size of the granules: between 6.00 and 10.00%.

In general, the present invention relates to a method or process for obtaining a product for building in the form of a paste or paint to be applied on a wall or for making insulation boards or for obtaining a product in the form of paint to be applied on a wall wherein the product is a product comprising lime putty and comprising the following components according to weight percentages:
- lime putty or a mixture of lime putty and gypsum: between 2.80 and 6.50%;
- first quantity of water: between 55.00 and 70.00%;
- resins: between 0.10 and 1.70%;
- material in the form of natural fibres: between 0.00 and 1.70%;
- material in the form of synthetic fibres: between 0.00 and 1.70%;
- aerogel with a large or fine average size of the granules: between 17.00 and 45.00%, preferably consisting of aerogel with a large average size of the granules in a quantity between 14.00 and 35.00% plus aerogel with a fine average size of the granules in a quantity between 3.00 and 10.00%;
- possible second quantity of water: between 0 and 10%.

Advantageously the product obtained by the method according to the present invention is in the form of a wet paste, ready for use. It is sufficient, before use, to shake it manually or mechanically in order to make it uniform because during transport it can sediment slightly. The ready for use product in the form of a wet paste can be used easily by any operator, no dusts will be inhaled, it has no disagreeable and harmful odours.

Advantageously the product obtained by the method according to the present invention has good insulation characteristics, maintaining a high breathing function. At the same time, the product also performs an antibacterial and anti-mould function. The product is also fireproof and dehumidifying. The product is not putrescible and so it maintains in time without damaging and without losing its characteristics. Advantageously the product is recyclable also when dry.
It is also necessary to underline that the product is an almost completely natural product.

The applicant, with reference to the new formulations according to the invention, succeeded in considerably increasing the quantity of aerogel incorporated in the mixture or paste, thanks to the combined action of the resin and of the fibres of natural or synthetic origin. In the previously made tests the incorporation of high quantities of aerogel, like those described in the present description, was considered an impossible result by the applicant due to the high hygroscopicity of aerogel. Only thanks to the presence of the resin in combination with the fibres it is possible to obtain the incorporation in a stable way of high quantities of aerogel.

The result is a product in the form of a paste, which is particularly advantageous to be used as an insulating material which can be easily applied to the walls both outside and inside as a normal plaster. Advantageously the mixing process occurs at room temperature, so that also the preparation of the product is particularly simple and economical.

We would like to point out that the provided order of the phases of addition of the product is essential to obtain the product according to the invention, but if necessary it is also possible to invert some phases as indicated in the present description.

With respect to the specified quantities it is provided that greater quantities of water, added in the phase of addition of a first quantity of water and in the possible phase of addition of a second quantity of water, may be used with respect to the other components to obtain a more liquid product or, vice versa, lower quantities of water may be used with respect to the other components to obtain a more viscous product, according to the requirements of application of the product on the wall, or according to the need to add further components, such as pigments or aggregates of various nature, such as marmorino plaster, silicon powder.

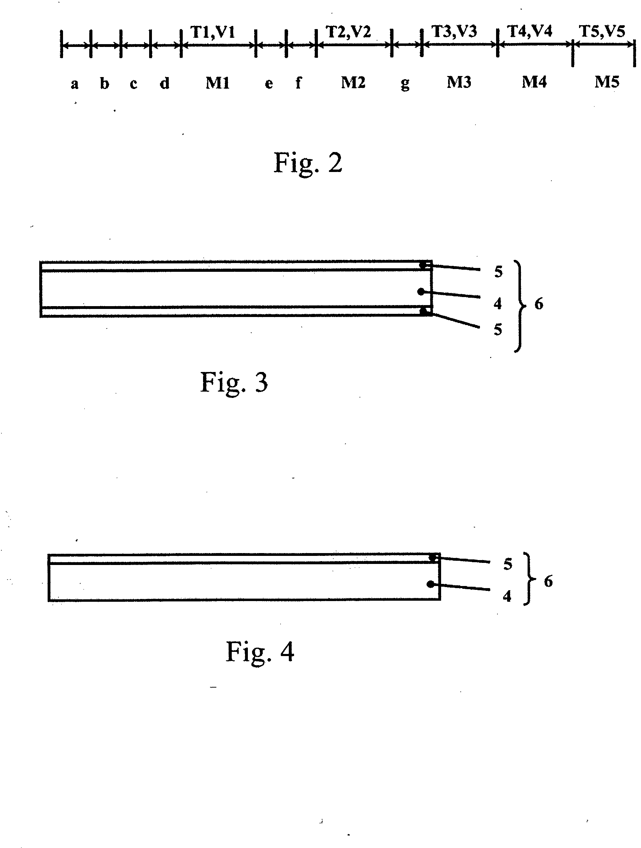

In combination with the lime putty it is also possible to use a mixture of lime putty and clay or a mixture of lime putty and gypsum to make the mixture more hydraulic and even more suitable for environments with a high degree of humidity. The percentage ratio between lime putty and clay will have to be considered analogous to that specified in the present description for the mixture of lime putty and gypsum. The use of the gypsum in combination with the lime putty does not alter the excellent insulation results obtained by the product according to the invention and the gypsum contributes to speeding up the hardening of the product in the form of a paste, a characteristic which is particularly useful in the case of production (Fig. 3, Fig. 4) of insulation boards (6), as will be explained in the present description.

In case of application on an external wall of a building the applicant also noticed that the product provides the wall with good characteristics of reflection of the solar and/or thermal energy. In this way, by applying the product for example on the wall both inside and outside one can obtain in summer a function of reflection of the solar energy contributing to keeping the house cool and, in winter, one can obtain a heating function of the thermal energy contributing to energy saving, without stopping the wall breathing as many prior art products do.

As for the preparation process, this occurs within a mixer, preferably of the vertical type with blades placed externally with respect to the stirring axis.

The process according to the present invention provides the use of a mixer able to reach an operating speed on the order of 500-2500 revolutions/minute. In particular the process provides the presence of mixing phases at different speeds according to the operating phase in progress and to the type of product that one wants to obtain. In particular there are provided mixing phases with speeds between 500 and 1200 revolutions/minute, between 1200 and 1800 revolutions/minute, between 1800 and 2800 revolutions/minute. In the mixing phases which occur at higher speeds with respect to the others, in particular at speeds higher than 1200 revolutions/minute, there is the crushing of the aerogel introduced. This aspect is particularly advantageous because it allows to break the aerogel particles introduced enabling a more homogenous compound and also to use aerogel with a large average size of the granules, which is more economical with respect to that used, for example, in the Italian patent application no. UD2011A000212 in the name of the applicant.

The process according to the invention for obtaining a product for building in the form of a semi-liquid or liquid paste to be applied on a wall or for making insulation boards, in detail, provides (Fig. 2) the following phases:
a) adding in the mixer lime putty or a mixture of lime putty and clay or a mixture of lime putty and gypsum;
b) adding in the mixer a first quantity of water;
c) adding in the mixer resins;
   M1) first mixing phase for a first time T1 at a first mixing speed V1;
d) adding in the mixer material in the form of natural fibres or material in the form of synthetic fibres or mixtures thereof;
   M2) second mixing phase for a second time T2 at a second mixing speed V2;
e) adding in the mixer aerogel in a granular form with a large average size of the granules;
f) adding in the mixer aerogel with a very fine average size of the granules;
   M3) third mixing phase for a third time T3 at a third mixing speed V3;
g) possibly adding in the mixer a second quantity of water;
   M4) possible fourth mixing phase for a fourth time T4 at a fourth mixing speed V4;
   M5) possible fifth mixing phase for a fifth time T5 at a fifth mixing speed V5 wherein the fourth mixing phase and the fifth mixing phase are carried out in sequence after each other.

The phase g) can be included in the phase b) or it can be absent.

In the first part of the process all the components are added in the mixer except for the aerogel and for the possible second quantity of water. The first mixing phase for the first time T1 at the first mixing speed V1 can start before the addition of the first component or it can start after the addition of one or more components or it can start after the addition of the last component related to the phases a) to d).

The first mixing phase M1) will preferably occur for a first time T1 between 10 minutes and 60 minutes, preferably between 10 minutes and 30 minutes. The first mixing phase will preferably occur at a first speed V1 between 500 revolutions/minute and 1200 revolutions/minute.

After the first mixing phase M1) one passes to the phase d) which is related to the addition in the mixer of material in the form of natural fibres or material in the form of synthetic fibres or mixtures thereof with a consequent second mixing phase M2) which will preferably occur for a second time T2 between 10 minutes and 60 minutes, preferably between 10 minutes and 30 minutes. The second mixing phase will preferably occur at a second speed V2 between 1200 and 1800 revolutions/minute.

In a different embodiment of the method according to the present invention in the first part of the process all the components related to the phases a) to d) are added in sequence in the mixer with one single continuous mixing phase operating at the first speed V1 or operating at the second speed V2, or operating initially at the first speed V1 and after the addition of all the components at the second speed V2.

After said first part of the method according to the invention one proceeds to the addition of aerogel with reference to the phases e) and f). The third mixing phase for the third time T3 at the third mixing speed V3 can start after the addition of a first quantity of aerogel such as the quantity related to the phase e) or f). Preferably mixing does not stop during the phases e) and f), and during the addition of aerogel there may also be an extension of the second mixing phase M2) or an anticipation of the third mixing phase M3).

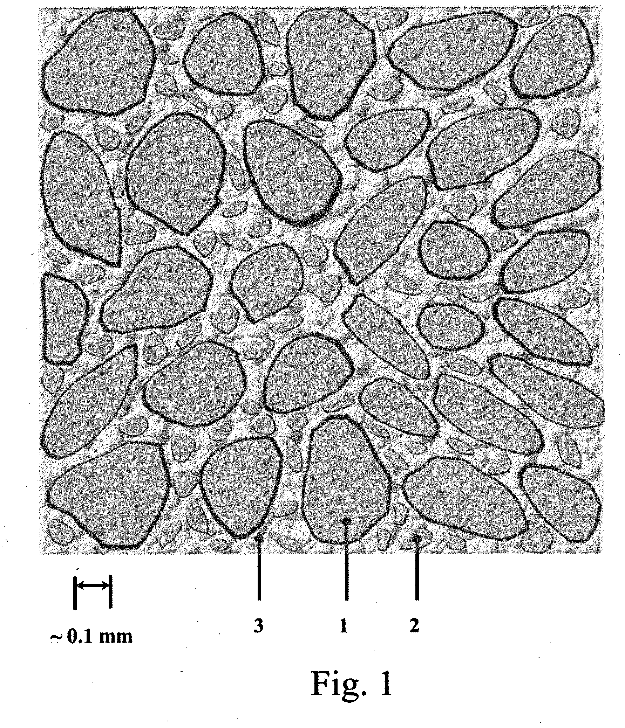

The third mixing phase will preferably occur for a second time T3 between 20 minutes and 60 minutes, preferably about 30 minutes. The third mixing phase will occur with a third speed V3 between 1200 and 1800 revolutions/minute, preferably about 1500 revolutions/minute. The applicant, following tests and experiments, found such optimal values, which are not the result of a random choice but suit specific preparation requirements. In fact, too low values of the third speed V3 cause the separation of the aerogel from the mixture, jeopardizing the incorporation effect of the fibres and of the resin. On the contrary, too high values of the third speed V3 cause an excessive heating of the mixture, which would therefore be too dry, jeopardizing its workability. Furthermore, we would like to point out that the third speed V3 must be high because the applicant found the ideal minimum value to be able to break the aerogel in a granular form with a large average size of the granules, so that it is possible to use in the preparation a more economical type of aerogel with respect to what is provided for example by the Italian patent application no. UD2011A000212 in the name of the applicant. In practice by the present method the aerogel particles are broken and incorporated into the lime putty (Fig. 1) obtaining a composition in which first aerogel particles (1) and second aerogel particles (2) of different sizes are uniformly incorporated into the lime putty (3). Furthermore, by the present method and by using the indicated components, in particular resin and fibres, it is possible to obtain a stable incorporation of high quantities of aerogel obtaining a product with high performances from the point of view of insulation.

An additional advantage with respect to the process in the name of the applicant previously described for example in the Italian patent application no. UD2011A000212 lies in the significant reduction in the preparation times, which decrease from over four hours to times that may also be on the order of one hour only. In general the mixing can last about one hour with possible short pauses of 3-6 minutes to reduce the effect of the heating due to the friction of the material against the walls. It is provided that the method includes a phase of detection of the temperature inside the mixer and a phase of interruption of the mixing phase following the detection of a temperature higher than a given threshold in order to keep the temperature below a value on the order of 40 to 60°C.

An additional advantage is due to the fact that by the new process one limits the use of large quantities of aerogel in a non-granular form, limiting the release of dust into the environment.

The resin allows to obtain the carbonation of the lime together with a binding effect and a weather-proofing effect which does not preclude breathing. Furthermore, thanks to the elimination of the linseed oil with respect to the solution according to the Italian patent application no. UD2011A000212 in the name of the applicant, one also reduces or eliminates the effect of modification of the colours in time caused by the linseed oil, obtaining a compound which is more stable not only from the point of view of the incorporation of aerogel, but also from the point of view of the colours.

In the case in which the phase g) of possible addition in the mixer of a second quantity of water is carried out, the third mixing phase M3) can continue until reaching the desired consistency, in this phase it being possible to keep speed at a value corresponding to the third speed V3 or it being possible to decrease it to values on the order of the second speed V2 to prevent the overheating of the mixture.
The product in the form of a paste will be ready at the end of the third mixing phase M3).

The applicant also developed a further mixing phase consisting of the fourth mixing phase M4) for a fourth time T4 between 20 minutes and 60 minutes, preferably about 30 minutes, at a fourth speed V4 between 1800 and 2800 revolutions/minute, preferably about 2500 revolutions/minute. In fact, the applicant, following the experimentation of the new formulations, discovered that, by extending the mixing after the third mixing phase M3), once a minimum critical time of about 30 minutes has passed, a product is obtained which is adapted to be used as stucco or finish coating to be applied on the walls.

The applicant also developed a further mixing phase consisting of the fifth mixing phase M5) for a fifth time T5 between 20 minutes and 60 minutes, preferably about 30 minutes, at a fifth speed V5 between 1800 and 2800 revolutions/minute, preferably about 2500 revolutions/minute. In fact, the applicant, following the experimentation of the new formulations, discovered that, by extending the mixing after the fourth mixing phase M4), once a minimum critical time of about 30 minutes has passed, a product is obtained which is adapted to be used as a paint or dye.

By means of a thermographic survey and measurements of the thermal conductivity or conductibility λ (lambda) and of the volumetric thermal capacity *ρ*^{Cₚ} (ro cₚ), following application tests of the product in the form of a paste, a considerable improvement of the product from the point of view of thermal insulation was found. Furthermore, it was found that the product is applicable in a stable way also with greater thicknesses.

In general, therefore, by the new product it will be possible to obtain applications with greater thicknesses thanks to its capacity of being applied in a stable way or it will be possible to use smaller thicknesses by virtue of the improved performances also thicknesses on the order of 3-5 mm being sufficient to obtain a good thermal insulation.

The material is advantageously fireproof and hygroscopic, and, if exposed to flames or to the heat, it releases no harmful gases.

Advantageously the product is able, upon preparation of the surface, to adhere also on metal materials, such as on iron, also enabling to make coatings of these materials providing the metal structure with insulating properties with respect to the environment. Furthermore, thanks to the improved adhesion capability, the material is also suitable for the coating of other materials such as fibreglass or wooden surfaces. In practice the obtained product is very suitable also for applications in the mechanical and naval sectors.

In the case of making of boards, moreover, the new formulation allows to obtain a fast drying of the material, speeding up the processes of production of insulation boards.

By the provided formulations it has been possible to obtain environmentally-friendly and highly insulating products with thermal conductivity or conductibility λ (lambda) also up to 0.0147 W/mK, at present below any other type of material for thermal insulation available on the market.

### Example 1 - Sample 1

A sample (Sample 1) was prepared, which is to be considered as a reference sample prepared with lime only. The reference sample is used as a comparison sample to check the characteristics of the product according to the invention.

### Characteristics of the sample:

- Composition: 100% lime
- Sample sizes: discs having a diameter of 8 cm and a height of about 30 mm
- Preparation method: once the mixture had been made, it was poured into a mould having an internal diameter of 8 cm and a height of 3 cm, and then it was left to dry and age. The surfaces of the sample were kept unchanged detecting the presence of a surface roughness which is usual following drying, obtaining a rough surface
- Application of a sensor on the circular surface of the sample
- Carrying out of the experiment: with reference to the sample prepared as described, the coefficient λ (lambda) was measured, which expresses thermal conductivity or conductibility with measurements based on the average temperature of the sample of 10 centigrade degrees and a temperature difference of 20 centigrade degrees between the two opposite surfaces of the sample.

The results are shown in Table 16.

### Example 2a - Sample 2a

A sample (Sample 2a) was prepared to check the characteristics of the product according to the invention.

### Characteristics of the sample:

- Composition: as from Table 1
- Sample sizes: discs having a diameter of 8 cm and a height of about 25 mm
- Preparation method: mixing of the components added in the order provided in a mixer; mixing at room temperature according to the preparation method provided. Once the mixture had been made, it was poured into a mould having an internal diameter of 8 cm and a height of 25 mm, and then it was left to dry and age. The surfaces of the sample were kept unchanged detecting the presence of a surface roughness which is usual following drying, obtaining a rough surface
- Application of the sensor: like for Sample 1
- Carrying out of the experiment: like for Sample 1.

The results are shown in Table 16.

### Example 2b - Sample 2b

A sample (Sample 2b) was prepared to check the characteristics of the product according to the invention.

### Characteristics of the sample:

- Composition: as from Table 2
- Sample sizes: discs having a diameter of 8 cm and a height of about 25 mm
- Preparation method: mixing of the components added in the order provided in a mixer; mixing at room temperature according to the preparation method provided. Once the mixture had been made, it was poured into a mould having an internal diameter of 8 cm and a height of 25 mm, and then it was left to dry and age. The surfaces of the sample were kept unchanged detecting the presence of a surface roughness which is usual following drying, obtaining a rough surface
- Application of the sensor: like for Sample 1
- Carrying out of the experiment: like for Sample 1.

The results are shown in Table 16.

### Example 3 - Sample 3

A sample (Sample 3) was prepared to check the characteristics of the product according to the invention.

### Characteristics of the sample:

- Composition: as from Table 9
- Sample sizes: plates having a size of 30 cm x 30 cm and a height of about 26.83 mm
- Preparation method: mixing of the components added in the order provided in a mixer; mixing at room temperature according to the preparation method provided. Once the mixture had been made, it was poured into a mould corresponding to the sizes provided, and then it was left to dry and age
- Measurements taken by the instrument LASERCOMP FOX 314 with a plate transducer, set temperature above 0°C, set temperature below 20°C, environmental temperature 20°C. Test made by an apparatus certified under regulation EN 12667, with an average temperature of the specimen of 10°C. Duration of the test of about 24 hours.

The results are shown in Table 16.

### Results

The results of the tests made on the various previously defined and described samples are shown in the following Table 16.

As it can be seen from the numerical values obtained, extremely low values of the thermal conductivity or conductibility coefficient were found.

**Table 16**

| | 1 | 2a | 2b | 3 |
|---|---|---|---|---|
| λ[W/m K] | 0.368 | 0.020 | 0.018 | 0.019 |
| Δλ% | - | -94% | -95% | -95% |

The values shown refer to averages on a series of measurements taken under the same conditions.

Furthermore, keeping the samples monitored, after a month, it was possible to notice a considerable improvement as compared to the previously made tests, on the order of 20-30%. This is given by the carbonation of lime, the calcite crystals, by forming automatically, improve reflection, thus providing better insulation. We can ascertain that this material will continuously improve in time, up to total carbonation. Therefore, the invention demonstrates that, unlike other materials that in time deteriorate both in their material and in their insulating power, the invention tends to improve its own initial characteristics.

Preferably the glass fibre is an alkali-resistant glass fibre. Types of glass fibres suitable for the present application are the glass fibres for example having a specific weight of about 1.9 kg/dm³. However, variations are possible on the basis of the resistance characteristics one wishes to obtain, for example in the case in which one also wishes to obtain characteristics of higher or lower resistance to impacts. In the same way, on the basis of the same assessments, also the average length of the usable glass fibres may change.

The naturalness of the invention and the combination of the materials which make it up allow to use the lime as a binder, with its breathing, antibacterial and heat-reflective characteristics contributing to creating healthy environments.

Advantageously the product in the form of a paste obtained by the method according to the present invention can be used (Fig. 3, Fig. 4) to obtain insulation boards (6), for example of the type in which the paste (4) according to the invention is enclosed between two supporting layers (5). The insulation board (6) for building according to the present invention is characterized by the presence of at least one (Fig. 4) supporting layer (5) in the form of a sheet, preferably (Fig. 3) two supporting layers (5) in the form of sheets, preferably of paper, cardboard, basalt or the like, if necessary treated in order to provide the panels with waterproof characteristics to ensure excellent tightness also in case of environments with a high degree of humidity, between which the described material in the form of a paste (4) with a high aerogel content according to the invention is interposed. The board (6) according to the present invention is particularly suitable to be used as an insulation board (6) for building and in particular to replace plasterboard panels, improving with respect to the latter the performances from the point of view of insulation. However, the applicant found out that the board (6) according to the present invention can also be advantageously used as an insulation board to be applied to boilers and machines which need insulation from the heat or from the cold or from both. In case of application on the external wall of a building the applicant also found out that the boards (6) according to the present invention provide the wall with good solar and/or thermal energy reflection characteristics. In this way, by applying the panels for example on the wall both inside and outside, it will be possible to obtain in summer a solar energy reflection function contributing to keeping the house cool and, in winter, it will be possible to obtain a heating function of the thermal energy contributing to energy saving, however without stopping the wall breathing as many prior art products do. The supporting layer (5) can be a sheet of paper, cardboard, basalt or the like, if necessary applied on one or both sides of the board (6), or a reinforcement made of glass fibre and resin applied on one or both sides of the board. If necessary at least one surface of the insulation board for building is treated by applying glass fibre and resin. Preferably for the making of the insulation boards one will resort to the formulations comprising the mixture of lime putty and gypsum because the use of gypsum in combination with lime putty does not alter the excellent insulation results obtained by the product according to the invention and the gypsum contributes to speeding up the hardening of the product in the form of a paste, a characteristic which is particularly useful in the case of production (Fig. 3, Fig. 4) of insulation boards (6).

The applicant also made some tests on samples obtained by the method according to the present invention with reference to the absence of harmful emissions into the environment, obtaining excellent results. The tests were made according to the emission test chamber method UNI EN ISO 16000-9 with a sample having a surface of 0.2 square metres obtaining in the test after 28 days concentrations of formaldehyde lower than 9 µg per cubic meter, of acetaldehyde lower than 19 µg per cubic meter, of trimethylhydroxysilane lower than 3 µg per cubic meter, of hexamethyldisiloxane lower than 11 µg per cubic meter and substantially non-detectable emissions of toluene, tetrachloroethylene, isomeric xylenes, 1,2,4 trimethylbenzene, 1,4 dichlorobenzene, ethylbenzene, 2 butoxyethanol, styrene, trimethylfluorosilane, i-propanol, n-butanol, hexamethylcyclotrisiloxane, octamethyltrisiloxane, ethylhexanol.

The applicant also made some tests related to sound insulation by means of standing wave tube measurements of the acoustic absorption coefficient for insulating pastes based on aerogel obtained by the method according to the present invention. The result of the tests made has evidenced that the product according to the present invention, although being mainly developed to ensure better thermal insulation, has excellent qualities, they too with great improvements, with respect to the prior art products. The comparison with traditional solutions, such as plasters of various nature, has evidenced a better behaviour in terms of random incidence acoustic absorption for both samples. For example, at the frequency of 500 Hz the paste according to the present invention has an acoustic absorption coefficient of 0.16 for a sample having a thickness of 10 mm and of 0.19 for a sample having a thickness of 30 mm, whereas that of the traditional lime plaster is of 0.06.

## Claims

1. Method for the production of a product for building in the form of a semi-liquid or liquid paste adapted to be applied on a wall or to manufacture insulations boards comprising phases of mixing of lime putty and aerogel together with other components, wherein said method includes the following steps of addition of components and mixing phases in a mixer provided with mixing means, said steps of addition and said mixing phases occurring until obtaining said product:
a) adding in the mixer lime putty or a mixture of lime putty and gypsum;
b) adding in the mixer a first quantity of water;
c) adding in the mixer resins of the colloid or thickening type;
d) adding in the mixer a material in the form of natural fibres or a material in the form of synthetic fibres or mixtures thereof;
M1) first mixing phase for a first time T1 at a first mixing speed V1, in which the first time T1 is between 10 minutes and 60 minutes, preferably between 10 minutes and 30 minutes, in which the first mixing speed V1 between 500 revolutions/minute and 1200 revolutions/minute;
M2) second mixing phase for a second time T2 at a second mixing speed V2, in which the second time T2 is between 10 minutes and 60 minutes, preferably between 10 minutes and 30 minutes, in which the second mixing speed V2 is between 1200 and 1800 revolutions/minute;
e) adding in the mixer a first quantity of aerogel;
f) adding in the mixer a second quantity of aerogel;
g) possibly adding in the mixer a second quantity of water;
**characterised in that**
said step e) is an addition step of aerogel in a granular form with an average size of the granules between 0.1 and 5 mm, preferably with an average size of the granules between 1.5 mm and 5 mm, said step f) is an addition step of aerogel in the form of a powder with an average size of the particles between 2 and 40 microns, preferably with an average size of the particles between 2 and 24 microns,
and further **characterized in that**
a third mixing phase M3) is present after said phase f) in which said third mixing phase occurs for a third time T3 at a third mixing speed V3, the third time T3 being between 20 minutes and 60 minutes, preferably about 30 minutes and the third mixing speed V3 being between 1200 and 1800 revolutions/minute.

2. Method for the production of a product for building in the form of a semi-liquid or liquid paste adapted to be applied on a wall or to manufacture insulation boards according to the previous claim, **characterised in that**
said aerogel is silicon aerogel.

3. Method for the production of a product for building in the form of a semi-liquid or liquid paste adapted to be applied on a wall or to manufacture insulation boards according to any of the previous claims, **characterised in that**
it includes further mixing phases following said phase M3) or following said possible phase g), said further mixing phases being selected from:
- a fourth mixing phase M4) which occurs for a fourth time T4 at a fourth mixing speed V4, said fourth mixing phase involving the transformation of the product obtained following the previous phases from a product in the form of a paste into a product in the form of stucco or finish coating;
- said fourth mixing phase M4) being followed by a fifth mixing phase M5) which occurs for a fifth time T5 at a fifth mixing speed V5, said fourth mixing phase M4) and fifth mixing phase M5) being carried out in sequence after each other and involving the transformation of the product obtained following the previous phases from a product in the form of a paste into a product in the form of a paint or dye;
in which the fourth time T4 or the fifth time T5 are between 20 minutes and 60 minutes, preferably about 30 minutes, in which the fourth mixing speed V4 or the fifth mixing speed V5 are between 1800 and 2800 revolutions/minute, preferably about 2500 revolutions/minute.

4. Method for the production of a product for building in the form of a semi-liquid or liquid paste adapted to be applied on a wall or to manufacture insulation boards according to any of the previous claims, **characterised in that**
the components are added in the following quantities according to weight percentages:
- lime putty or a mixture of lime putty and gypsum: between 2.80 and 6.50%;
- first quantity of water: between 55.00 and 70.00%;
- resins: between 0.10 and 1.70%;
- material in the form of natural or synthetic fibres or mixtures thereof: between 0.70 and 1.70%;
- aerogel with a large average size of the granules: between 14.00 and 35.00%;
- aerogel with a very fine average size of the granules: between 3.00 and 10.00%;
- possible second quantity of water: between 0 and 10%.

5. Method for the production of a product for building in the form of a semi-liquid or liquid paste adapted to be applied on a wall or to manufacture insulation boards according to the previous claim, **characterised in that**
the components are added according to one of the formulations selected from:
I) first formulation:
- lime putty or a mixture of lime putty and gypsum: between 3.00 and 6.00%;
- first quantity of water: between 55.00 and 65.00%;
- resins: between 0.10 and 1.50%;
- material in the form of natural fibres: between 0.70 and 1.00%;
- material in the form of synthetic fibres: 0.00%;
- aerogel with a large average size of the granules: between 15.00 and 28.00%;
- aerogel with a very fine average size of the granules: between 3.00 and 10.00%;
- possible second quantity of water: between 7 and 10%.
II) second formulation:
- lime putty or a mixture of lime putty and gypsum: between 2.80 and 6.00%;
- first quantity of water: between 58.00 and 70.00%;
- resins: between 0.10 and 1.50%;
- material in the form of natural fibres: 0.00%;
- material in the form of synthetic fibres: between 1.20 and 1.70%;
- aerogel with a large average size of the granules: between 14.00 and 35.00%;
- aerogel with a very fine average size of the granules: between 5.00 and 10.00%;
- possible second quantity of water: 0.00%.
III) third formulation:
- lime putty or a mixture of lime putty and gypsum: between 3.00 and 6.50%;
- first quantity of water: between 58.00 and 70.00%;
- resins: between 0.10 and 1.70%;
- material in the form of natural fibres: between 0.40 and 0.80%;
- material in the form of synthetic fibres: between 0.40 and 0.80%;
- aerogel with a large average size of the granules: between 15.00 and 32.00%;
- aerogel with a very fine average size of the granules: between 6.00 and 10.00%;
- possible second quantity of water: 0.00%.

6. Method for the production of a product for building in the form of a semi-liquid or liquid paste adapted to be applied on a wall or to manufacture insulation boards according to any of the previous claims, **characterised in that**
said resins of the colloid or thickening type are resins consisting of a mixture comprising lentisk resin or Chios mastic, an oil, preferably wood oil or soybean oil, said mixture preferably further comprising glycerides of fatty acids.

7. Method for the production of a product for building in the form of a semi-liquid or liquid paste adapted to be applied on a wall or to manufacture insulation boards according to any of the previous claims, **characterised in that**
said phase a) is a phase of addition of a mixture of lime putty and gypsum containing from 35 to 65% in weight of lime putty with respect to the quantity in weight of gypsum, preferably of a mixture of lime putty and gypsum containing from 40 to 60% in weight of lime putty with respect to the quantity in weight of gypsum, even more preferably of a mixture of lime putty and gypsum containing about 50% in weight of lime putty with respect to the quantity in weight of gypsum.

8. Method for the production of a product for building in the form of a semi-liquid or liquid paste adapted to be applied on a wall or to manufacture insulation boards according to any of the previous claims, **characterised in that**
the second mixing speed V2 is greater than the first mixing speed V1.

9. Method for the production of a product for building in the form of a semi-liquid or liquid paste adapted to be applied on a wall or to manufacture insulation boards according to any of the previous claims, **characterised in that**
the phase d) which is related to the addition of said material in the form of natural fibres or synthetic fibres or mixtures thereof is a phase of addition of material in the form of fibres selected from the group consisting of cellulose fibres, glass fibres, basalt fibres or a mixture of two or more of said components, said cellulose fibres preferably being cellulose fibres in the form of powder or flakes, possibly from paper recycling processes, said cellulose fibres having a content of at least 40% of fibres having a length greater than 32 microns and a content lower than 2% of fibres having a length greater than 2500 microns, or a content of at least 50% of fibres having a length greater than 32 microns and a content lower than 10% of fibres having a length greater than 800 microns, or a content of at least 60% of fibres having a length greater than 32 microns and a content lower than 10% of fibres having a length greater than 200 microns, or a combination thereof.

## Patentansprüche

1. Verfahren zur Herstellung eines Bauprodukts in Form einer halbflüssigen oder flüssigen Paste, die zum Aufbringen auf eine Wand oder zur Herstellung von Dämmplatten geeignet ist, und Phasen des Vermischens von Kalkspachtel und Aerogel zusammen mit anderen Bestandteilen umfasst, wobei das besagte Verfahren die folgenden Schritte der Zugabe von Komponenten und Mischphasen in einem Mischer umfasst, der mit einer Mischeinrichtung versehen ist, wobei die besagten Schritte der Zugabe und die besagten Mischphasen auftreten, bis das besagte Produkt erhalten wird:
a) Zugabe von Kalkspachtel oder einer Mischung aus Kalkspachtel und Gips in den Mischer;
b) Zugabe einer ersten Menge Wasser in den Mischer;
c) Zugabe von kolloidalen oder verdickenden Harzen in den Mischer;
d) Zugabe eines Materials in Form von natürlichen Fasern oder eines Materials in Form von synthetischen Fasern oder Gemischen davon in den Mischer;
M1) erste Mischphase zum ersten Mal T1 bei einer ersten Mischgeschwindigkeit V1, bei der der erste Zeitpunkt T1 zwischen 10 Minuten und 60 Minuten, vorzugsweise zwischen 10 Minuten und 30 Minuten liegt, bei der die erste Mischgeschwindigkeit V1 zwischen 500 Umdrehungen/Minute und 1200 Umdrehungen/Minute liegt;
M2) zweite Mischphase zum zweiten Mal T2 bei einer zweiten Mischgeschwindigkeit V2, bei der die zweite Zeit T2 zwischen 10 Minuten und 60 Minuten, vorzugsweise zwischen 10 Minuten und 30 Minuten liegt, bei der die zweite Mischgeschwindigkeit V2 zwischen 1.200 und 1.800 Umdrehungen/Minute
e) Zugabe einer ersten Menge Aerogel in den Mischer;
f) Zugabe einer zweiten Menge Aerogel in den Mischer;
g) gegebenenfalls Zugabe einer zweiten Menge Wasser in den Mischer;
**dadurch gekennzeichnet, dass**
der besagte Schritt e) ein Additionsschritt von Aerogel in Granulatform mit einer durchschnittlichen Granulatgröße zwischen 0,1 und 5 mm ist, vorzugsweise mit einer durchschnittlichen Granulatgröße zwischen 1,5 mm und 5 mm, wobei der besagte Schritt f) ein Additionsschritt von Aerogel in Form eines Pulvers mit einer durchschnittlichen Partikelgröße zwischen 2 und 40 Mikron ist, vorzugsweise mit einer durchschnittlichen Partikelgröße zwischen 2 und 24 Mikron,
und weiter **dadurch gekennzeichnet, dass**
eine dritte Mischphase M3) nach besagter Phase f) vorhanden ist, in der die besagte dritte Mischphase für eine dritte Zeit T3 bei einer dritten Mischgeschwindigkeit V3 erfolgt, die dritte Zeit T3 zwischen 20 Minuten und 60 Minuten liegt, vorzugsweise etwa 30 Minuten und die dritte Mischgeschwindigkeit V3 zwischen 1.200 und 1.800 Umdrehungen/Minute liegt.

2. Verfahren zur Herstellung eines Bauprodukts in Form einer halbflüssigen oder flüssigen Paste, die zum Aufbringen auf eine Wand oder zur Herstellung von Dämmplatten nach dem vorhergehenden Anspruch geeignet ist, dadurch gegenzeichnet, dass
das besagte Aerogel Silizium-Aerogel ist.

3. Verfahren zur Herstellung eines Bauprodukts in Form einer halbflüssigen oder flüssigen Paste, die zum Aufbringen auf eine Wand oder zur Herstellung von Dämmplatten nach einem der vorhergehenden Ansprüche geeignet ist, **dadurch gekennzeichnet, dass**
es weitere Mischphasen nach der besagten Phase M3) oder nach der besagten möglichen Phase g) umfasst, wobei weiteren Mischphasen ausgewählt sind aus:
- einer vierten Mischphase M4), die zum vierten Mal T4 bei einer vierten Mischgeschwindigkeit V4 auftritt, wobei besagte vierte Mischphase die Umwandlung des nach den vorhergehenden Phasen erhaltenen Produkts von einem Produkt in Form einer Paste in ein Produkt in Form einer Kitt- oder Deckbeschichtung beinhaltet;
- der besagten vierten Mischphase M4) gefolgt von einer fünften Mischphase M5), die zum fünften Mal T5 bei einer fünften Mischgeschwindigkeit V5 auftritt, die besagte vierte Mischphase M4) und die fünfte Mischphase M5) nacheinander durchgeführt werden und die Umwandlung des nach den vorhergehenden Phasen erhaltenen Produkts von einem Produkt in Form einer Paste in ein Produkt in Form einer Farbe oder eines Farbstoffs beinhalten;
wobei der vierte Zeitpunkt T4 oder der fünfte Zeitpunkt T5 zwischen 20 Minuten und 60 Minuten, vorzugsweise etwa 30 Minuten liegen, bei der vierte Mischgeschwindigkeit V4 oder die fünfte Mischgeschwindigkeit V5 zwischen 1.800 und 2.800 Umdrehungen/Minute liegen, vorzugsweise etwa 2.500 Umdrehungen/Minute.

4. Verfahren zur Herstellung eines Bauprodukts in Form einer halbflüssigen oder flüssigen Paste, die zum Aufbringen auf eine Wand oder zur Herstellung von Dämmplatten nach einem der vorhergehenden Ansprüche geeignet ist, dadurch gegenzeichnet, dass
die Komponenten in folgenden Mengen nach Gewichtsprozenten hinzugefügt werden:
- Kalkspachtel oder eine Mischung aus Kalkspachtel und Gips: zwischen 2,80 und 6,50%;
- erste Wassermenge: zwischen 55,00 und 70,00%;
- Harze: zwischen 0,10 und 1,70%;
- Material in Form von natürlichen oder synthetischen Fasern oder Mischungen daraus: zwischen 0,70 und 1,70%;
- Aerogel mit einer großen durchschnittlichen Granulatgröße: zwischen 14,00 und 35,00%;
- Aerogel mit einer sehr feinen durchschnittlichen Granulatgröße: zwischen 3,00 und 10,00%;
- mögliche zweite Wassermenge: zwischen 0 und 10%.

5. Verfahren zur Herstellung eines Bauprodukts in Form einer halbflüssigen oder flüssigen Paste, die zum Aufbringen auf eine Wand oder zur Herstellung von Dämmplatten nach dem vorhergehenden Anspruch geeignet ist, dadurch gegenzeichnet, dass
die Komponenten gemäß einer der ausgewählten Formulierungen hinzugefügt werden:
I) erste Formulierung:
- Kalkspachtel oder eine Mischung aus Kalkspachtel und Gips: zwischen 3,00 und 6,00%;
- erste Wassermenge: zwischen 55,00 und 65,00%;
- Harze: zwischen 0,10 und 1,50%;
- Material in Form von natürlichen Fasern: zwischen 0,70 und 1,00%;
- Material in Form von synthetischen Fasern: 0,00%;
- Aerogel mit einer großen durchschnittlichen Granulatgröße: zwischen 15,00 und 28,00%;
- Aerogel mit einer sehr feinen durchschnittlichen Granulatgröße: zwischen 3,00 und 10,00%;
- mögliche zweite Wassermenge: zwischen 7 und 10%.
II) zweite Formulierung:
- Kalkspachtel oder eine Mischung aus Kalkspachtel und Gips: zwischen 2,80 und 6,00%;
- erste Wassermenge: zwischen 58,00 und 70,00%
- Harze: zwischen 0,10 und 1,50%;
- Material in Form von natürlichen Fasern: 0,00%;
- Material in Form von synthetischen Fasern: zwischen 1,20 und 1,70%;
- Aerogel mit einer großen durchschnittlichen Granulatgröße: zwischen 14,00 und 35,00%;
- Aerogel mit einer sehr feinen durchschnittlichen Granulatgröße: zwischen 5,00 und 10,00%;
- mögliche zweite Wassermenge: 0,00%.
III) dritte Formulierung:
- Kalkspachtel oder eine Mischung aus Kalkspachtel und Gips: zwischen 3,00 und 6,50%;
- erste Wassermenge: zwischen 58,00 und 70,00%;
- Harze: zwischen 0,10 und 1,70%;
- Material in Form von natürlichen Fasern: zwischen 0,40 und 0,80%;
- Material in Form von synthetischen Fasern: zwischen 0,40 und 0,80%;
- Aerogel mit einer großen durchschnittlichen Granulatgröße: zwischen 15,00 und 32,00%;
- Aerogel mit einer sehr feinen durchschnittlichen Granulatgröße: zwischen 6,00 und 10,00%;
- mögliche zweite Wassermenge: 0,00%.

6. Verfahren zur Herstellung eines Bauprodukts in Form einer halbflüssigen oder flüssigen Paste, die zum Aufbringen auf eine Wand oder zur Herstellung von Dämmplatten nach einem der vorhergehenden Ansprüche geeignet ist, dadurch gegenzeichnet, dass
die besagten Harze vom Kolloid- oder Verdickungstyp Harze sind, die aus einer Mischung bestehen, die Linsenharz oder Chios-Mastix umfasst, ein Öl, vorzugsweise Holzöl oder Sojaöl, umfasst, wobei die besagte Mischung vorzugsweise weiterhin Glyceride von Fettsäuren umfasst.

7. Verfahren zur Herstellung eines Bauprodukts in Form einer halbflüssigen oder flüssigen Paste, die zum Aufbringen auf eine Wand oder zur Herstellung von Dämmplatten nach einem der vorhergehenden Ansprüche geeignet ist, **dadurch gekennzeichnet, dass**
die besagte Phase a) eine Phase der Zugabe einer Mischung aus Kalkspachtel und Gips ist, die 35 bis 65 Gew.-% Kalkspachtel enthält, bezogen auf die Gewichtsmenge an Gips, vorzugsweise aus einer Mischung von Kalkspachtel und Gips, die 40 bis 60 Gew.-% Kalkspachtel enthält, bezogen auf die Gewichtsmenge an Gips, noch bevorzugter aus einer Mischung von Kalkspachtel und Gips, die etwa 50 Gew.-% Kalkspachtel enthält, bezogen auf die Gewichtsmenge an Gips.

8. Verfahren zur Herstellung eines Bauprodukts in Form einer halbflüssigen oder flüssigen Paste, die zum Aufbringen auf eine Wand oder zur Herstellung von Dämmplatten nach einem der vorhergehenden Ansprüche geeignet ist, **dadurch gekennzeichnet, dass**
die zweite Mischgeschwindigkeit V2 größer ist als die erste Mischgeschwindigkeit V1.

9. Verfahren zur Herstellung eines Bauprodukts in Form einer halbflüssigen oder flüssigen Paste, die zum Aufbringen auf eine Wand oder zur Herstellung von Dämmplatten nach einem der vorhergehenden Ansprüche geeignet ist, **dadurch gekennzeichnet, dass**
die Phase d), die mit der Zugabe des Materials in Form von besagten natürlichen Fasern oder synthetischen Fasern oder Gemischen davon zusammenhängt, eine Phase der Zugabe von Material in Form von Fasern ist, die aus der Gruppe ausgewählt sind, die aus Cellulosefasern, Glasfasern, Basaltfasern oder einer Mischung aus zwei oder mehreren der besagten Komponenten besteht, wobei die Cellulosefasern vorzugsweise Cellulosefasern in Form von Pulver oder Flocken sind, möglicherweise aus Papierrecyclingprozessen, wobei die besagten Cellulosefasern ein Gehalt von mindestens 40% Fasern mit einer Länge von mehr als 32 Mikrometern und ein-Gehalt von weniger als 2% der Fasern mit einer Länge von mehr als 2.500 Mikrometern aufweisen, oder ein Gehalt von mindestens 50% Fasern mit einer Länge von mehr als 32 Mikrometern und einem Gehalt von weniger als 10% der Fasern mit einer Länge von mehr als 800 Mikrometern, oder ein Gehalt von mindestens 60% Fasern mit einer Länge von mehr als 32 Mikrometern und einem Gehalt von weniger als 10% der Fasern mit einer Länge von mehr als 200 Mikrometern oder eine Kombination davon.

## Revendications

1. Méthode pour la production d'un produit pour la construction sous la forme d'une pâte semi-liquide ou liquide apte à être appliqué sur une paroi ou pour la fabrication de panneaux isolants comprenant des phases de mélange de chaux en pâte et aérogel avec d'autres composants, où ladite méthode comprend les étapes suivantes d'addition de composants et phases de mélange dans un mélangeur pourvu de moyens de mélange, lesdites étapes d'addition et lesdites phases de mélange ayant lieu jusqu'à obtenir ledit produit :
a) ajouter dans le mélangeur de la chaux en pâte ou un mélange de chaux en pâte et gypse ;
b) ajouter dans le mélangeur une première quantité d'eau ;
c) ajouter dans le mélangeur des résines du type colloïde ou épaississant ;
d) ajouter dans le mélangeur un matériau sous la forme de fibres naturelles ou un matériau sous la forme de fibres synthétiques ou des mélanges de cela ;
M1) première phase de mélange pendant un premier temps T1 à une première vitesse de mélange V1, où le premier temps T1 est entre 10 minutes et 60 minutes, de préférence entre 10 minutes et 30 minutes, où la première vitesse de mélange V1 entre 500 tours/minute et 1200 tours/minute ;
M2) deuxième phase de mélange pendant un deuxième temps T2 à une deuxième vitesse de mélange V2, où le deuxième temps T2 est entre 10 minutes et 60 minutes, de préférence entre 10 minutes et 30 minutes, où la deuxième vitesse de mélange V2 est entre 1200 et 1800 tours/minute ;
e) ajouter dans le mélangeur une première quantité d'aérogel ;
f) ajouter dans le mélangeur une deuxième quantité d'aérogel ;
g) ajouter éventuellement dans le mélangeur une deuxième quantité d'eau ;
**caractérisée en ce que**
ladite étape e) est une étape d'addition d'aérogel dans une forme granuleuse avec une dimension moyenne des granules entre 0,1 et 5 mm, de préférence avec une dimension moyenne des granules entre 1,5 mm et 5 mm, ladite étape f) est une étape d'addition d'aérogel sous la forme d'une poudre avec une dimension moyenne des particules entre 2 et 40 microns, de préférence avec une dimension moyenne des particules entre 2 et 24 microns,
et **caractérisée en outre en ce que**
une troisième phase de mélange M3) est présente après ladite phase f) où ladite troisième phase de mélange a lieu pendant un troisième temps T3 à une troisième vitesse de mélange V3, le troisième temps T3 étant entre 20 minutes et 60 minutes, de préférence environ 30 minutes et la troisième vitesse de mélange V3 étant entre 1200 et 1800 tours/minute.

2. Méthode pour la production d'un produit pour la construction sous la forme d'une pâte semi-liquide ou liquide apte à être appliqué sur une paroi ou pour la fabrication de panneaux isolants selon la revendication précédente, **caractérisée en ce que** ledit aérogel est aérogel de silicium.

3. Méthode pour la production d'un produit pour la construction sous la forme d'une pâte semi-liquide ou liquide apte à être appliqué sur une paroi ou pour la fabrication de panneaux isolants selon l'une quelconque des revendications précédentes, **caractérisée en ce que**
elle comprend d'autres phases de mélange suivant ladite phase M3) ou suivant ladite phase éventuelle g), lesdites autres phases de mélange étant sélectionnées parmi :
- une quatrième phase de mélange M4) qui a lieu pendant un quatrième temps T4 à une quatrième vitesse de mélange V4, ladite quatrième phase de mélange impliquant la transformation du produit obtenu suivant les phases précédentes d'un produit sous la forme d'une pâte en un produit sous la forme de stuc ou couche de finition ;
- ladite quatrième phase de mélange M4) étant suivie d'une cinquième phase de mélange M5) qui a lieu pendant un cinquième temps T5 à une cinquième vitesse de mélange V5, ladite quatrième phase de mélange M4) et cinquième phase de mélange M5) étant effectuées en séquence l'une après l'autre et impliquant la transformation du produit obtenu suivant les phases précédentes d'un produit sous la forme d'une pâte en un produit sous la forme d'une peinture ou colorant ;
où le quatrième temps T4 ou le cinquième temps T5 sont entre 20 minutes et 60 minutes, de préférence environ 30 minutes, où la quatrième vitesse de mélange V4 ou la cinquième vitesse de mélange V5 sont entre 1800 et 2800 tours/minute, de préférence environ 2500 tours/minute.

4. Méthode pour la production d'un produit pour la construction sous la forme d'une pâte semi-liquide ou liquide apte à être appliqué sur une paroi ou pour la fabrication de panneaux isolants selon l'une quelconque des revendications précédentes, **caractérisée en ce que**
les composants sont ajoutés dans les quantités suivantes selon des pourcentages en poids :
- chaux en pâte ou un mélange de chaux en pâte et gypse : entre 2,80 et 6,50 % ;
- première quantité d'eau : entre 55,00 et 70,00 % ;
- résines : entre 0,10 et 1,70 % ;
- matériau sous la forme de fibres naturelles ou synthétiques ou mélanges de cela : entre 0,70 et 1,70 % ;
- aérogel avec une dimension moyenne grande des granules : entre 14,00 et 35,00 % ;
- aérogel avec une dimension moyenne très fine des granules : entre 3,00 et 10,00 % ;
- éventuelle deuxième quantité d'eau : entre 0 et 10 %.

5. Méthode pour la production d'un produit pour la construction sous la forme d'une pâte semi-liquide ou liquide apte à être appliqué sur une paroi ou pour la fabrication de panneaux isolants selon la revendication précédente, **caractérisée en ce que** les composants sont ajoutés selon l'une des formulations sélectionnées parmi :
I) première formulation :
- chaux en pâte ou un mélange de chaux en pâte et gypse : entre 3,00 et 6,00 % ;
- première quantité d'eau : entre 55,00 et 65,00 % ;
- résines : entre 0,10 et 1,50 % ;
- matériau sous la forme de fibres naturelles : entre 0,70 et 1,00 % ;
- matériau sous la forme de fibres synthétiques : 0,00 % ;
- aérogel avec une dimension moyenne grande des granules : entre 15,00 et 28,00 % ;
- aérogel avec une dimension moyenne très fine des granules : entre 3,00 et 10,00 % ;
- éventuelle deuxième quantité d'eau : entre 7 et 10 %.
II) deuxième formulation :
- chaux en pâte ou un mélange de chaux en pâte et gypse : entre 2,80 et 6,00 % ;
- première quantité d'eau : entre 58,00 et 70,00 % ;
- résines : entre 0,10 et 1,50 % ;
- matériau sous la forme de fibres naturelles : 0,00 % ;
- matériau sous la forme de fibres synthétiques : entre 1,20 et 1,70 % ;
- aérogel avec une dimension moyenne grande des granules : entre 14,00 et 35,00 % ;
- aérogel avec une dimension moyenne très fine des granules : entre 5,00 et 10,00 % ;
- éventuelle deuxième quantité d'eau : 0,00 %.
III) troisième formulation :
- chaux en pâte ou un mélange de chaux en pâte et gypse : entre 3,00 et 6,50 % ;
- première quantité d'eau : entre 58,00 et 70,00 % ;
- résines : entre 0,10 et 1,70 % ;
- matériau sous la forme de fibres naturelles : entre 0,40 et 0,80 % ;
- matériau sous la forme de fibres synthétiques : entre 0,40 et 0,80 % ;
- aérogel avec une dimension moyenne grande des granules : entre 15,00 et 32,00 % ;
- aérogel avec une dimension moyenne très fine des granules : entre 6,00 et 10,00 % ;
- éventuelle deuxième quantité d'eau : 0,00 %.

6. Méthode pour la production d'un produit pour la construction sous la forme d'une pâte semi-liquide ou liquide apte à être appliqué sur une paroi ou pour la fabrication de panneaux isolants selon l'une quelconque des revendications précédentes, **caractérisée en ce que**
lesdites résines du type colloïde ou épaississant sont des résines consistant en un mélange comprenant de la résine de lentisque ou mastic de Chios, une huile, de préférence huile de bois ou huile de soja, ledit mélange de préférence comprenant en outre des glycérides d'acides gras.

7. Méthode pour la production d'un produit pour la construction sous la forme d'une pâte semi-liquide ou liquide apte à être appliqué sur une paroi ou pour la fabrication de panneaux isolants selon l'une quelconque des revendications précédentes, **caractérisée en ce que**
ladite phase a) est une phase d'addition d'un mélange de chaux en pâte et gypse contenant de 35 à 65 % en poids de chaux en pâte par rapport à la quantité en poids de gypse, de préférence d'un mélange de chaux en pâte et gypse contenant de 40 à 60 % en poids de chaux en pâte par rapport à la quantité en poids de gypse, de manière encore plus préférée d'un mélange de chaux en pâte et gypse contenant approximativement 50 % en poids de chaux en pâte par rapport à la quantité en poids de gypse.

8. Méthode pour la production d'un produit pour la construction sous la forme d'une pâte semi-liquide ou liquide apte à être appliqué sur une paroi ou pour la fabrication de panneaux isolants selon l'une quelconque des revendications précédentes, **caractérisée en ce que**
la deuxième vitesse de mélange V2 est supérieure à la première vitesse de mélange V1.

9. Méthode pour la production d'un produit pour la construction sous la forme d'une pâte semi-liquide ou liquide apte à être appliqué sur une paroi ou pour la fabrication de panneaux isolants selon l'une quelconque des revendications précédentes, **caractérisée en ce que**
la phase d) qui est relative à l'addition dudit matériau sous la forme de fibres naturelles ou fibres synthétiques ou mélanges de cela est une phase d'addition de matériau sous la forme de fibres sélectionnées du groupe composé de fibres de cellulose, fibres de verre, fibres de basalte ou un mélange de deux ou plusieurs desdits composants, lesdites fibres de cellulose de préférence étant fibres de cellulose sous la forme de poudre ou flocons, éventuellement issues de procédés de recyclage du papier, lesdites fibres de cellulose ayant un contenu d'au moins 40 % de fibres ayant une longueur supérieure à 32 microns et un contenu inférieur à 2 % de fibres ayant une longueur supérieure à 2500 microns, ou un contenu d'au moins 50 % de fibres ayant une longueur supérieure à 32 microns et un contenu inférieur à 10 % de fibres ayant une longueur supérieure à 800 microns, ou un contenu d'au moins 60 % de fibres ayant une longueur supérieure à 32 microns et un contenu inférieur à 10 % de fibres ayant une longueur supérieure à 200 microns, ou une combinaison de cela.
